# EUROPÄISCHE PATENTSCHRIFT

(11) **EP 4 126 650 B1**
(45) Veröffentlichungstag und Bekanntmachung des Hinweises auf die Patenterteilung: **08.10.2025**
(21) Anmeldenummer: 21713580.5
(22) Anmeldetag: 22.02.2021
(51) Int. Cl.: B62M 6/55

(54) **ANTRIEBSEINHEIT**
DRIVE UNIT
UNITÉ D'ENTRAÎNEMENT

(30) Priorität: 23.03.2020 DE 102020203711
(43) Veröffentlichungstag der Anmeldung: 08.02.2023
(73) Patentinhaber: ZF Friedrichshafen AG, 88046 Friedrichshafen (DE)
(72) Erfinder: KRAFT, Steffen, 89134 Blaustein (DE); PERCIC, Miran, 73540 Heubach (DE); NIERESCHER, Rüdiger, 73529 Schwäbisch Gmünd (DE); KRAFT, Klaus, 89134 Blaustein (DE)
(86) Internationale Anmeldenummer: PCT/EP2021/054260
(87) Internationale Veröffentlichungsnummer: WO 2021/190844

(56) Entgegenhaltungen:
- EP-A1- 3 808 644
- WO-A1-2016/086526
- CN-A- 106 904 240
- CN-U- 204 383 714
- CN-U- 205 239 827
- CN-Y- 2 894 047
- US-A- 6 152 249
- US-B2- 9 789 929

## Beschreibung

Die Erfindung betrifft eine Antriebseinheit für ein manuell angetriebenes Fahrzeug mit den Merkmalen des Oberbegriffs von Anspruch 1, wobei ein manuell angetriebenes Fahrzeug insbesondere ein muskelkraftbetriebenes Fahrzeug ist.

US 6 152 249 A offenbart ein elektrisch unterstütztes Fahrrad, das aus einem Fahrradrahmen, mindestens zwei Rädern, einer manuellen Antriebseinheit, einer elektrischen Antriebseinheit, einer Leistungsübertragungseinheit und einer Batterie besteht. Die manuelle Antriebseinheit und die elektrische Antriebseinheit sind verbunden und zusammen mit der Batterie zwischen den beiden Rädern auf dem Fahrradrahmen montiert. Die elektrische Antriebseinheit besteht aus einem Motor, einem Wellgetriebe, Lagern, Dichtungskomponenten und Befestigungselementen. Die Drehachse des Motors und des Wellgetriebes ist gleichzeitig identisch mit der Tretkurbelwelle der manuellen Antriebseinheit, und kann sich relativ zum Motor und dem Wellgetriebe drehen. Der Motor ist über das Wellgetriebe mit einem hinteren Leistungsübertragungssystem verbunden.

DE 10 2015 100 676 A1 offenbart eine Antriebsbaugruppe mit einem manuellen Antrieb, einem elektrischen Hilfsantrieb und einem gemeinsamen Abtriebselement. Die Antriebseinheit weist einen komplexen Aufbau mit einer Vielzahl an einzelnen Komponenten und Lagerstellen auf.

EP 2 724 926 A1 offenbart eine zentrale Antriebseinheit mit einer Tretlagerwelle für einen manuellen Antrieb und einen Hilfsantrieb mit einem nachgeschalteten Planetengetriebe. Auch diese Antriebseinheit weist einen vergleichsweise komplexen Aufbau mit einer Vielzahl einzelner Komponenten auf.

DE 10 2014 108 611 A1 offenbart eine Fahrradantriebsvorrichtung mit einem Antriebsgehäuse zur Aufnahme einer Tretkurbelwelle und einem Spannungswellengetriebe, das innerhalb des Antriebsgehäuses angeordnet und mit einem Zugmittelträger triebtechnisch in Verbindung bringbar ist. Diese Fahrradantriebsvorrichtung verfügt ebenfalls über einen komplexen Aufbau.

WO 2016/086526 A1 zeigt eine Mittelantriebsvorrichtung für ein Fahrrad mit Elektromotor.

CN 2 894 047 Y, CN 204 383 714 U und CN 205 239 827 U US 9 789 929 B2 und CN 106 904 240 A zeigen Antriebsvorrichtungen für Fahrräder.

Der Erfindung liegt die Aufgabe zugrunde, eine gegenüber dem oben genannten Stand der Technik verbesserte Antriebseinheit bereitzustellen. Insbesondere sind eine Package-Optimierung und eine kompakte Bauweise wünschenswert.

Die Erfindung löst diese Aufgabe durch eine Antriebseinheit mit den Merkmalen des Anspruchs 1. Die Antriebseinheit ist eingerichtet für ein manuell angetriebenes Fahrzeug, insbesondere ein Fahrrad oder ein EPAC (Electrically Power Assisted Cycle). Die Antriebseinheit weist ein Gehäuse, eine Tretkurbelwelle, einen elektrischen Hilfsantrieb und eine als im Wesentlichen topfförmige Hohlwelle ausgebildete Abtriebswelle auf. Die Tretkurbelwelle und die Abtriebswelle sind koaxial zueinander angeordnet und die Abtriebswelle umgibt die Tretkurbelwelle axial abschnittsweise und radial außen. Radial zwischen der Tretkurbelwelle und der Abtriebswelle sind eine erste Freilaufkupplung und eine zweite Freilaufkupplung angeordnet, die axial zueinander benachbart sind und auf die Abtriebswelle wirken.

Durch die koaxiale Anordnung der Komponenten lässt sich eine gute Ausnutzung des zur Verfügung stehenden Bauraums erreichen, was eine kompakte Bauweise begünstigt. So können die Baugruppen der Antriebseinheit zentral um die Tretkurbelwelle angeordnet werden, beispielsweise eine Elektronikeinheit beziehungsweise eine Elektronikplatine, ein Elektromotor, eine Getriebeeinheit, eine Abtriebswelle und/oder Freilaufkupplungen.

Die Freilaufkupplungen wirken auf die Abtriebswelle, sind also jeweils abtriebsseitig, das heißt über einen Abtrieb der Freilaufkupplung, beispielsweise einen Außenring, mechanisch mit der Abtriebswelle gekoppelt. Die Freilaufkupplungen können mit einer Innenumfangsfläche der Abtriebswelle gekoppelt sein. Diese Innenumfangsfläche kann axial durchgehend ausgebildet sein, insbesondere mit gleichbleibendem Durchmesser. Unabhängig davon kann an der Abtriebswelle ein Kettenblatt oder ein Kettenblattträger zur Kopplung mit einer Antriebskette befestigbar sein.

Der Abtrieb der Freilaufkupplungen beispielsweise deren Außenring, kann mit der Innenumfangsfläche der Abtriebswelle drehfest verbunden sein, beispielsweise durch Einpressen der Freilaufkupplung. Die Freilaufkupplungen können jeweils einen Innenring, einen Außenring und dazwischen befindliche Steuerelemente aufweisen, die eine Übertragung eines Drehmoments zwischen Innenring und Außenring in nur eine Drehrichtung ermöglichen. Bei den Steuerelementen kann es sich beispielsweise um Klemmrollen, Klemmkörper, Sperrklingen oder dergleichen handeln.

Der elektrische Hilfsantrieb kann einen Elektromotor und eine damit mechanisch gekoppelte Getriebeeinheit, beispielsweise ein Wellgetriebe aufweisen. Mit einem Wellgetriebe sind bei kompakter Bauweise hohe Übersetzungsverhältnisse erreichbar. Das Wellgetriebe weist einen Wellgenerator, eine verformbare zylindrische Buchse mit Außenverzahnung (Flexspline) und eine zylindrischen Außenbuchse mit Innenverzahnung auf. Der Wellgenerator kann als elliptische Scheibe mit darauf angeordnetem Wälzlager und optional einem verformbaren Laufring ausgebildet sein. Der Flexspline kann ringförmig oder topfförmig ausgebildet sein. Üblicherweise dient der Flexspline als Abtrieb des Wellgetriebes.

Der Elektromotor kann als Außenläufermotor ausgebildet sein, das heißt der Rotor des Elektromotors kann als Außenläufer ausgebildet sein. Der Rotor umgibt den Stator radial außen. Dadurch können eine vorteilhafte Leistungsdichte und eine kompakte Baugröße erreicht werden.

Es kann ein Statorträger vorgesehen sein, der einen, insbesondere hülsenförmigen, Trageabschnitt und einen, insbesondere scheibenförmigen, Befestigungsabschnitt aufweist. Am Statorträger, insbesondere am Trageabschnitt, kann der Stator befestigt und/oder der Rotor mittels eines Wälzlagers gelagert sein. Unabhängig davon kann am Statorträger, insbesondere am Befestigungsabschnitt, eine Elektronik, beispielsweise eine Elektronikplatine, befestigt sein. Über den Befestigungsabschnitt kann der Statorträger im Inneren des Gehäuses der Antriebseinheit befestigt werden

Der elektrische Hilfsantrieb weist ein Wellgetriebe mit einem Flexspline auf, wobei der Flexspline über einen, vorzugsweise ringförmigen, Adapter mit der zweiten Freilaufkupplung gekoppelt ist. Durch den Adapter kann ein Zwischenraum zwischen Flexspline und zweiter Freilaufkupplung radial überbrückt werden. Die Abtriebswelle kann somit konstruktiv und fertigungstechnisch einfacher ausgestaltet werden. Der Adapter kann optional gehärtet sein. Dies erhöht die Standfestigkeit des Adapters. Wie zuvor beschrieben, kann der elektrische Hilfsantrieb einen Elektromotor aufweisen, der mit dem Wellgetriebe gekoppelt ist. Somit kann ein Drehmoment des Elektromotors mittels Wellgetriebe und Adapter auf die Abtriebswelle übertragen werden.

Der Flexspline weist als Abtrieb des Wellgetriebes einen, vorzugsweise hülsenförmigen, Kopplungsabschnitt auf, über den der Flexspline und der ringförmige Adapter in einem Verbindungsbereich miteinander verbunden sind, wobei im Verbindungsbereich eine Passung und/oder eine Klebung ausgebildet sind. Dies trägt zu einer präzisen und stabilen Kopplung von Flexspline und Adapter bei. So kann in einem Teil des Verbindungsbereichs eine Passung zwischen Flexspline und ringförmigem Adapter ausgebildet sein (Passungsbereich). In einem weiteren Teil des Verbindungsbereichs kann eine Klebung ausgebildet sein (Klebebereich).

Passungsbereich und Klebebereich können jeweils durch einen, beispielsweise am Adapter und/oder am Kopplungsabschnitt ausgebildeten, radialen Absatz voneinander getrennt sein. Somit sind die Funktionsflächen von Passungsbereich und Klebebereich voneinander getrennt.

In vorteilhafter Weise kann die erste Freilaufkupplung die Tretkurbelwelle mit der Abtriebswelle koppeln. Damit ist ein manueller Antrieb der Abtriebswelle möglich, beispielsweise durch Betätigung der Tretkurbelwelle mittels Muskelkraft. Eine Kraftflusskopplung liegt vor, wenn von einer Komponente, beispielsweise der Tretkurbelwelle, ein Drehmoment auf die andere Komponente, beispielsweise die Abtriebswelle, übertragen werden kann.

In zweckmäßiger Weise kann die zweite Freilaufkupplung den Kraftfluss zwischen elektrischem Hilfsantrieb und der Abtriebswelle koppeln. Damit ist ein elektrischer Antrieb beziehungsweise Hilfsantrieb der Abtriebswelle möglich. Eine Kraftflusskopplung liegt vor, wenn von einer Komponente, beispielsweise dem Hilfsantrieb, ein Drehmoment auf die andere Komponente, beispielsweise die Abtriebswelle, übertragen werden kann.

In vorteilhafter Weise kann die Tretkurbelwelle einen ersten Wellenteil und einen separaten zweiten Wellenteil aufweisen oder aus diesen Wellenteilen gebildet sein, wobei die Wellenteile, insbesondere reversibel und axial miteinander verbindbar sind. Die Tretkurbelwelle kann somit beispielsweise axial teilbar sein. Eine Montage ist erleichtert, da eine Baugruppe auch innerhalb des zylindrischen Gehäuses der Antriebseinheit einfach montiert werden kann. Im Verbindungsbereich kann ein Wellenteil einen axial abragenden Bund aufweisen, der den anderen Wellenteil im verbundenen Zustand radial außen umgibt, das heißt die Wellenteile überlappen einander im Verbindungsbereich und ein Wellenteil kann einen Einsteckabschnitt und das andere Wellenteil einen damit korrespondierenden Aufnahmeabschnitt aufweisen.

In zweckmäßiger Weise können die beiden Wellenteile mittels einer, vorzugsweise zentrisch angeordneten, Verschraubung aneinander befestigbar sein. Hiermit ist eine konstruktiv einfache und stabile Befestigung möglich. Die Verschraubung kann mittels nur einer Schraube erfolgen. Die Mittellängsachse der Schraube kann axial ausgerichtet sein, das heißt parallel oder insbesondere koaxial zur Mittellängsachse der Tretkurbelwelle orientiert sein. Die Schraube kann durch ein Durchgangsloch in einem Wellenteil, beispielsweise dem zweiten Wellenteil, durchgesteckt und in einer mit einem Innengewinde versehenen Bohrung des anderen Wellenteils, beispielsweise des ersten Wellenteils, eingeschraubt werden.

Erfindungsgemäß ist die Tretkurbelwelle einenends mittels einem ersten Lager an einem das Gehäuse, insbesondere stirnseitig, begrenzenden Gehäusedeckel drehbar gelagert und die Tretkurbelwelle ist andernends mittels einem zweiten Lager an der Abtriebswelle gelagert. Hiermit ist eine zuverlässige und konstruktiv günstige Lagerung der Tretkurbelwelle geschaffen.

In zweckmäßiger Weise kann die Tretkurbelwelle einen nach radial außen abragenden Wellenabsatz aufweisen, über den die Tretkurbelwelle mit der ersten Freilaufkupplung gekoppelt ist, wobei eine Sensorik zur Drehmomenterfassung vorgesehen sein kann, die das auf die Tretkurbelwelle aufgebrachte Drehmoment am Wellenabsatz, beispielsweise stirnseitig, erfasst. Dies stellt eine konstruktiv günstige und zugleich platzsparende Bauweise dar, da unabhängig vom angewandten Messverfahren auf eine klassische Drehmomentmessung mittels einer Hülse verzichtet werden kann.

Die Sensorik zur Drehmomenterfassung kann auf die Tretkurbelwelle, beispielsweise auf eine Stirnseite des Wellenabsatzes, aufgebracht und daran befestigt sein. Die Sensorik kann somit an der Messstelle appliziert werden und dreht sich mit der Welle mit. Eine Energieversorgung kann ausgehend von einer Elektronikeinheit, zum Beispiel einer Elektronikplatine, durch Schleifkontakte oder induktiv erfolgen. Ein Signal der Sensorik kann per Funk oder Schleifkontakt an die Elektronikeinheit, beispielsweise die Elektronikplatine übertragen werden.

In zweckmäßiger Weise kann die Sensorik zur Drehmomenterfassung einen oder mehrere Dehnmesstreifen aufweisen, die beispielsweise stirnseitig am Wellenabsatz angebracht sind. Hiermit ist eine zuverlässige Erfassung des Drehmoments möglich. Eine Drehmomentbestimmung, das heißt eine Bestimmung des auf die Tretkurbelwelle aufgebrachten Drehmoments, kann anhand der erfassten Verformung des Wellenabsatzes relativ zur Tretkurbelwelle erfolgen.

Alternativ oder ergänzend kann die Sensorik in vorteilhafter Weise zur Drehmomenterfassung ein oder mehrere magnetostriktive Messelemente aufweisen, die beispielsweise stirnseitig am Wellenabsatz angebracht sind. Auch hiermit kann eine Bestimmung des Drehmoments erfolgen. Eine Drehmomentbestimmung, das heißt eine Bestimmung des auf die Tretkurbelwelle aufgebrachten Drehmoments, kann anhand der erfassten Schubspannungen des Wellenabsatzes erfolgen.

In zweckmäßiger Weise kann eine Hülse vorgesehen sein, die auf die Tretkurbelwelle aufgeschoben oder aufgepresst ist, wobei die Hülse einen Aufnahmeabschnitt für ein oder mehrere Wälzlager des Flexspline aufweist, wobei das oder die Wälzlager in dem Aufnahmeabschnitt axial fixierbar ist beziehungsweise sind. Somit ist auf konstruktiv einfache Weise eine axiale Positionierung der Lagerung des Flexsplines möglich. Bei dem oder den Wälzlagern handelt es sich um abtriebsseitig angeordnete Wälzlager des Flexsplines, die beispielsweise am Kopplungsabschnitt des Flexspline angeordnet sind. Am Aufnahmeabschnitt kann ein sich beispielsweise axial erstreckender Durchbruch zur Durchführung elektrischer Leitungen ausgebildet sein. Somit kann eine Elektronik der Antriebseinheit auf einfache Weise mit der Sensorik, das heißt einer zur Sensorik gehörenden Elektronik, verbunden werden.

In vorteilhafter Weise kann mittels der Hülse eine Dichtfläche für eine Dichtstelle zwischen der Tretkurbelwelle und einem Statorträger gebildet sein, durch welchen die Tretlkurbelwelle hindurch geführt ist. Dadurch kann am Statorträger eine zuverlässige Abtrennung gebildet werden. Damit lassen sich eine auf einer Seite des Statorträgers angeordnete Elektronikeinheit beispielsweise Elektronikplatine, von auf der anderen Seite des Statorträgers angeordneten mechanischen, ggf. mit Schmiermittel zu versehenden, Komponenten abtrennen. Dies reduziert das Risiko von Elektronikschäden.

In zweckmäßiger Weise können die Hülse und die Tretkurbelwelle mittels eines radial zwischen der Tretkurbelwelle und der Hülse angeordneten Dichtelements, beispielsweise einem O-Ring, abgedichtet sein. Dadurch können Kapillarwirkungen radial zwischen der Tretkurbelwelle und der Hülse unterbunden werden. Dies reduziert das Risiko von Elektronikschäden abermals.

In vorteilhafter Weise kann an oder in der Hülse eine Leitungsführung, beispielsweise ein Kanal, ausgebildet sein, in der elektrische Leitungen zur Leistungsübertragung und/oder Signalübertragung zwischen einer Sensorik zur Drehmomentmessung, die beispielsweise am Wellenabsatz angeordnet ist, zu einer Elektronikeinheit, beispielsweise einer am Statorträger angeordneten Elektronikplatine, anordenbar sind. Dadurch können elektrische Energie und/oder Signale besonders platzsparend durch die Hülse hindurch übertragen werden.

In zweckmäßiger Weise können auf die Hülse ein oder mehrere Schleifringe zur elektrischen Leistungsübertragung und/oder Signalübertragung zwischen der Elektronikeinheit und einer Sensorik zur Drehmomentmessung aufgebracht sein, vorzugsweise wobei die Elektronik, beispielsweise Elektronikplatine ein oder mehrere Schleifkontakte aufweisen kann, die jeweils mit einem Schleifring zusammenwirken. Hiermit ist eine platzsparende und einfach zu montierende Leistungsübertragung und/oder Signalübertragung möglich. Das Signal der Sensorik kann beispielsweise über eine Funkfrequenz auf einen der Schleifringe aufmoduliert werden.

Die Erfindung wird im Folgenden anhand der Figuren näher erläutert, wobei gleiche oder funktional gleiche Elemente mit identischen Bezugszeichen versehen sind. Es zeigen:
- Fig. 1: ein Ausführungsbeispiel der Antriebseinheit in Schnittansicht;
- Fig. 2: die Abtriebswelle und die Freilaufkupplungen der Antriebseinheit aus Fig. 1 in einer vergrößerten Teilansicht;
- Fig. 3: den Flexspline des Wellgetriebes der Antriebseinheit aus Fig. 1 in einer vergrößerten Teilansicht;
- Fig. 4: die Tretkurbelwelle der Antriebseinheit aus Fig. 1 in Schnittansicht;

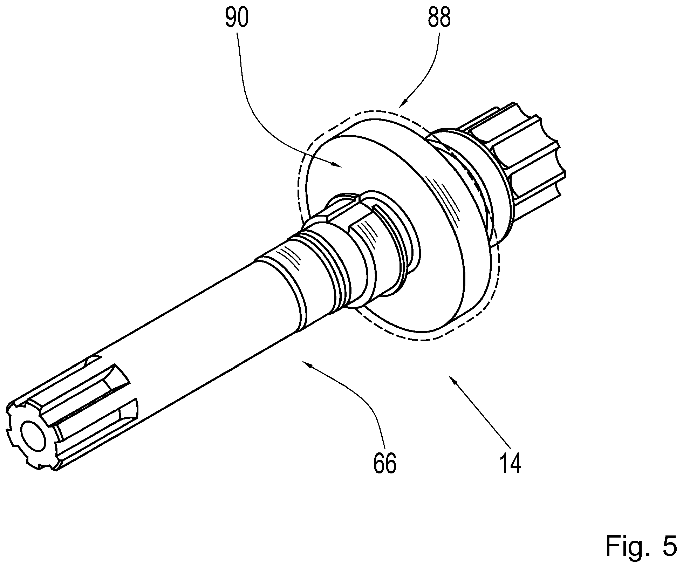

- Fig. 5: die Tretkurbelwelle der Antriebseinheit aus Fig. 1 in perspektivischer Ansicht; und
- Fig. 6a, b: die Tretkurbelwelle, die Hülse und der Statorträger der Antriebseinheit aus Fig. 1 in Stirnsicht (Fig. 6a) und Schnittansicht (Fig. 6b).

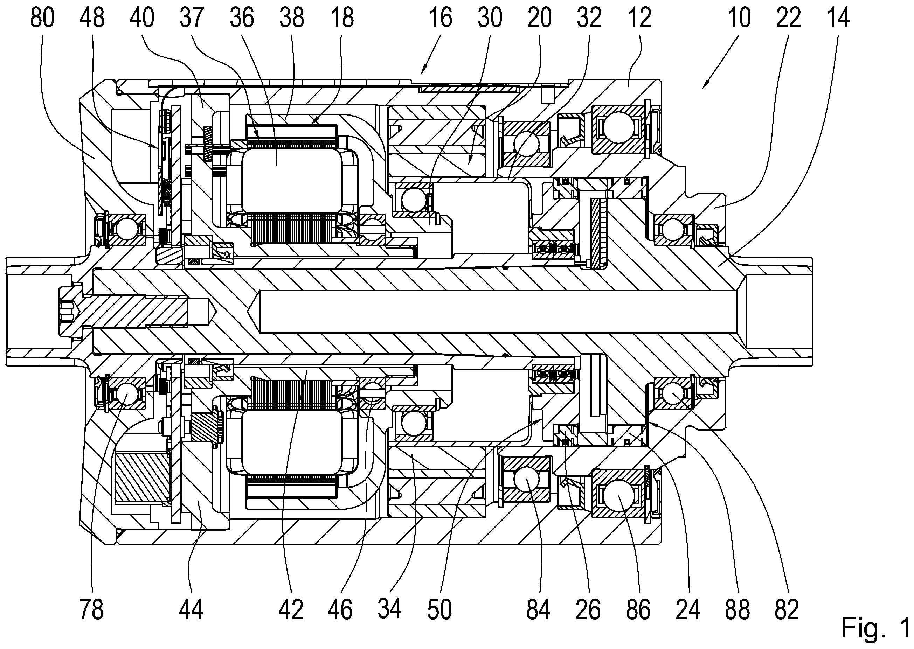

Figur 1 zeigt eine Antriebseinheit für ein manuell angetriebenes Fahrzeug wie beispielsweise ein Fahrrad oder ein EPAC, wobei die Antriebseinheit insgesamt mit dem Bezugszeichen 10 bezeichnet ist.

Die Antriebseinheit 10 weist ein Gehäuse 12 auf, an oder in dem die Komponenten der Antriebseinheit 10 angeordnet sind. Die Antriebseinheit 10 weist für einen manuellen Antrieb durch Muskelkraft eine Tretkurbelwelle 14 auf, die im Gehäuse 12 der Antriebseinheit 10 drehbar gelagert ist. Zudem weist die Antriebseinheit 10 einen elektrischen Hilfsantrieb 16 auf, der einen Elektromotor 18 und ein Wellgetriebe 20 aufweist. Weiter weist die Antriebseinheit 10 eine im Wesentlichen topfförmigen Abtriebswelle 22 auf, die als Hohlwelle ausgebildet ist.

Die Tretkurbelwelle 14 und die Abtriebswelle 22 sind koaxial zueinander angeordnet und die Abtriebswelle 22 umgibt die Tretkurbelwelle 14 axial abschnittsweise und radial außen. Radial zwischen der Tretkurbelwelle 14 und der Abtriebswelle 22 sind eine erste Freilaufkupplung 24 und eine zweite Freilaufkupplung 26 angeordnet, die axial zueinander benachbart sind und auf die Abtriebswelle 22 wirken.

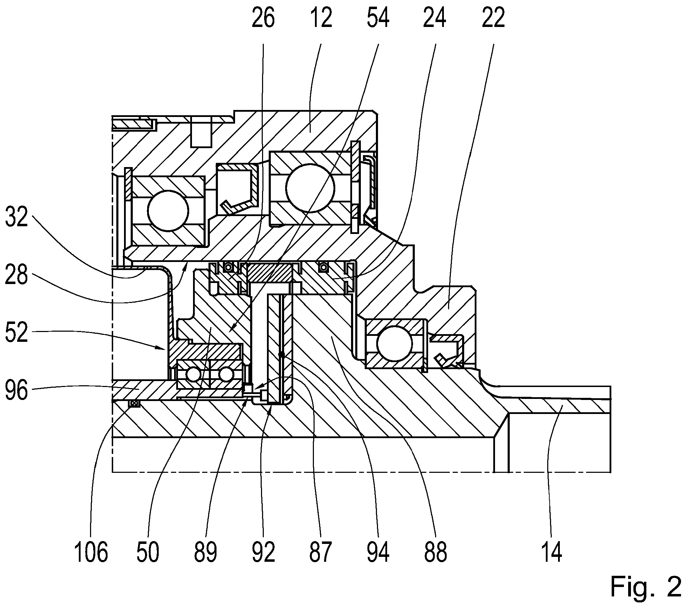

Die Freilaufkupplungen 24, 26 (Fig. 2) wirken mechanisch auf die Abtriebswelle 22, sind also jeweils abtriebsseitig, das heißt über einen Abtrieb der Freilaufkupplungen 24, 26, beispielsweise einen Außenring, mit der Abtriebswelle 22 gekoppelt. Die Freilaufkupplungen 24, 26 können wie im Beispiel mit einer Innenumfangsfläche 28 der Abtriebswelle 22 gekoppelt sein. Die Innenumfangsfläche 28 kann axial durchgehend ausgebildet sein, insbesondere mit gleichbleibendem Durchmesser. An der Abtriebswelle 22 kann ein Kettenblatt oder ein Kettenblattträger zur Kopplung mit einer Antriebskette befestigbar sein (nicht dargestellt). Der Abtrieb der Freilaufkupplungen 24, 26, beispielsweise deren Außenringe, können mit der Innenumfangsfläche 28 der Abtriebswelle 22 drehfest verbunden sein, beispielsweise durch Einpressen der jeweiligen Freilaufkupplung.

Der Hilfsantrieb 16 weist einen Elektromotor 18 und ein gekoppeltes Wellgetriebe 20 auf (Fig. 1). Das Wellgetriebe 20 weist einen Wellgenerator 30, eine verformbare zylindrische Innenbuchse 32 mit Außenverzahnung (Flexspline) und eine zylindrische Außenbuchse 34 mit Innenverzahnung auf.

Der Elektromotor 18 weist einen Stator 36 mit Statorwicklungen 37 und einen Rotor 38 auf. Der Elektromotor 18 ist im Beispiel als Außenläufermotor ausgebildet, das heißt der Rotor 38 des Elektromotors 18 ist als Außenläufer ausgebildet und der Rotor 38 umgibt den Stator 36 radial außen.

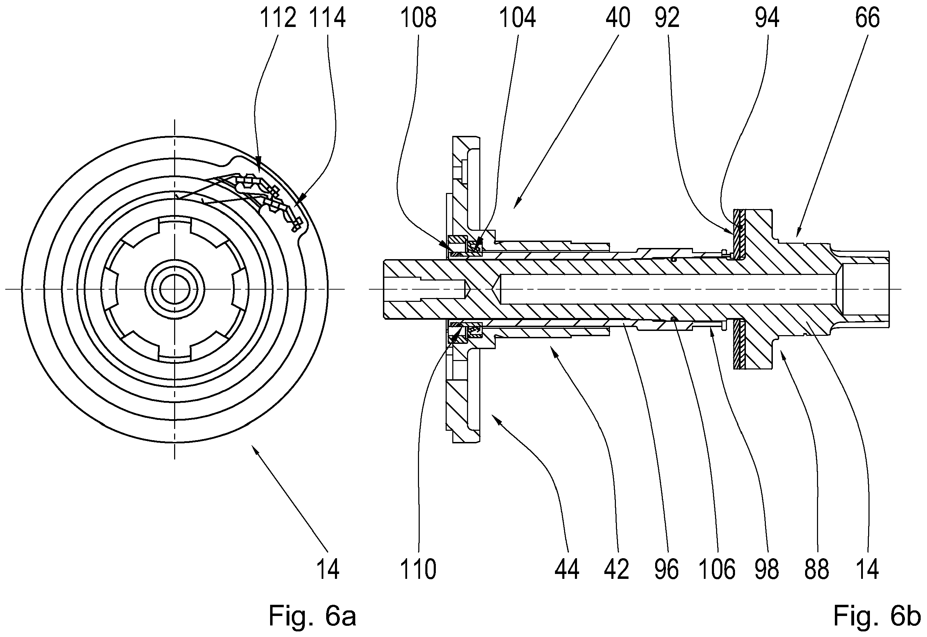

Es ist ein Statorträger 40 vorgesehen (Fig. 1, Fig. 6b), der einen, insbesondere hülsenförmigen, Trageabschnitt 42 und einen scheibenförmigen, Befestigungsabschnitt 44 aufweist. Am Statorträger 40, insbesondere am Trageabschnitt 42, kann wie im Beispiel der Stator 36 befestigt und/oder der Rotor 38 mittels eines Wälzlagers 46 gelagert sein. Unabhängig davon kann am Statorträger 40, insbesondere am Befestigungsabschnitt 44, eine Elektronikeinheit 48, beispielsweise eine Elektronikplatine, befestigt sein. Über den Befestigungsabschnitt 44 kann der Statorträger 40 im Gehäuse 12 befestigt werden.

Die erste Freilaufkupplung 24 koppelt die Tretkurbelwelle 14 mit der Abtriebswelle 22. Dadurch kann in einer Drehrichtung von der Tretkurbelwelle 14 ein Drehmoment auf die Abtriebswelle 22 übertragen werden. Die zweite Freilaufkupplung 26 koppelt den elektrischen Hilfsantrieb 16 mit der Abtriebswelle 22. Dadurch kann in einer Drehrichtung von dem Hilfsantrieb 16 ein Drehmoment auf die Abtriebswelle 22 übertragen werden.

Wie bereits erläutert, weist der elektrische Hilfsantrieb 16 ein Wellgetriebe 20 mit einem Flexspline 32 auf, wobei der Flexspline 32 über einen vorzugsweise ringförmigen Adapter 50 mit der zweiten Freilaufkupplung 26 gekoppelt ist. Der Adapter 50 kann optional gehärtet sein.

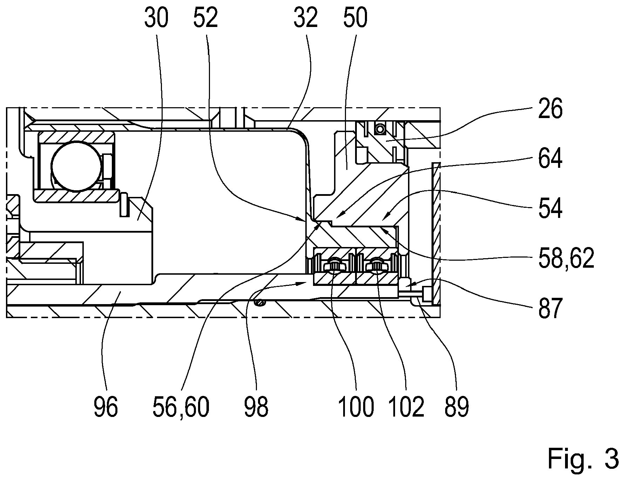

Der Flexspline 32 weist einen vorzugsweise hülsenförmigen Kopplungsabschnitt 52 auf, über den der Flexspline 32 und der Adapter 50 in einem Verbindungsbereich 54 miteinander verbunden sind (Fig. 2 und 3), wobei im Verbindungsbereich eine Passung 56 und/oder eine Klebung 58 ausgebildet sind. In einem Teil 60 des Verbindungsbereichs 54 ist eine Passung 56 zwischen Flexspline 32 und Adapter 50 ausgebildet (Passungsbereich 60). In einem weiteren Teil 62 des Verbindungsbereichs 54 ist eine Klebung 58 ausgebildet (Klebebereich 62). Der Passungsbereich 60 und der Klebebereich 62 können wie im Beispiel jeweils durch einen am Adapter 50 und am Kopplungsabschnitt 52 ausgebildeten radialen Absatz 64 voneinander getrennt sein.

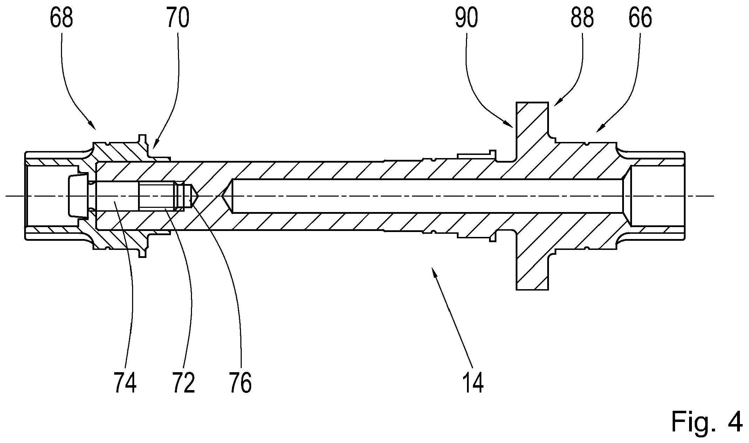

Die Tretkurbelwelle 14 weist einen ersten Wellenteil 66 und einen separaten zweiten Wellenteil 68 auf (Fig. 4) und ist aus diesen Wellenteilen 66, 68 gebildet, wobei die Wellenteile 66, 68, reversibel miteinander verbindbar sind. Die Tretkurbelwelle 14 ist somit axial teilbar. Im Verbindungsbereich weist der zweite Wellenteil 68 einen axial abragenden Bund 70 auf, der den ersten Wellenteil 66 im verbunden Zustand radial außen umgibt. Somit überlappen sich die Wellenteile 66, 68 einander im verbundenen Zustand im Verbindungsbereich.

Die beiden Wellenteile 66, 68 sind mittels einer, vorzugsweise zentrisch angeordneten, Verschraubung 72 aneinander befestigbar. Die Verschraubung 72 kann mittels nur einer Schraube 74 erfolgen. Die Mittellängsachse der Schraube 74 ist axial ausgerichtet, das heißt parallel oder insbesondere koaxial zur Mittellängsachse der Tretkurbelwelle 14 orientiert. Die Schraube 74 kann durch eine Durchgangsbohrung im zweiten Wellenteil 68 durchgesteckt und in einer mit einem Innengewinde versehenen Bohrung 76 des ersten Wellenteils 66 eingeschraubt werden.

Die Tretkurbelwelle 14 ist einenends mittels einem ersten Lager 78 (Fig. 1) an einem das Gehäuse 12 stirnseitig begrenzenden Gehäusedeckel 80 drehbar gelagert. Zudem ist die Tretkurbelwelle 14 andernends mittels einem zweiten Lager 82 an der Abtriebswelle 22 drehbar gelagert. Die Abtriebswelle 22 ist wiederum mit einem dritten Lager 84 und einem vierten Lager 86 drehbar an der Abtriebswelle 22 gelagert.

Die Tretkurbelwelle 14 weist einen nach radial außen abragenden Wellenabsatz 88 auf (Fig. 1 und 2), über den die Tretkurbelwelle 14 mit der ersten Freilaufkupplung 24 gekoppelt ist. Es ist eine Sensorik 92 zur Drehmomenterfassung vorgesehen (Fig. 2 und 6b), die das auf die Tretkurbelwelle 14 aufgebrachte Drehmoment am Wellenabsatz 88 insbesondere stirnseitig, das heißt an der Stirnseite 90 des Wellenabsatzes 88 erfasst.

Die Sensorik 92 zur Drehmomenterfassung kann auf die Tretkurbelwelle 14, beispielsweise auf der Stirnseite 90 des Wellenabsatzes 88 aufgebracht und daran befestigt sein. Die Sensorik 92 kann somit an der Messstelle, das heißt der Stirnseite 90 des Wellenabsatzes 88, appliziert werden und dreht sich mit der Tretkurbelwelle 14.

Die Sensorik 92 zur Drehmomenterfassung kann einen oder mehrere Dehnmesstreifen (nicht dargestellt) aufweisen, die stirnseitig am Wellenabsatz 88 angebracht sind. Eine Drehmomentbestimmung kann anhand der erfassten Verformung des Wellenabsatzes 88 relativ zur Tretlkurbelwelle 14 erfolgen.

Alternativ oder ergänzend kann die Sensorik 92 zur Drehmomenterfassung ein oder mehrere magnetostriktive Messelemente 94 aufweisen, die stirnseitig, das heißt an der Stirnseite 90 des Wellenabsatzes 88 angebracht sind. Eine Drehmomentbestimmung kann anhand der erfassten Schubspannungen des Wellenabsatzes 88 erfolgen.

Die Antriebseinheit 10 weist eine Hülse 96 auf, die auf die Tretkurbelwelle 14 aufgeschoben oder aufgepresst ist (Fig. 3 und 6b), wobei die Hülse 96 einen Aufnahmeabschnitt 98 für ein oder mehrere Wälzlager 100, 102 des Flexspline 32 aufweist, wobei das oder die Wälzlager 100, 102 in dem Aufnahmeabschnitt 98 axial fixierbar ist beziehungsweise sind. Die Wälzlager 100, 102 lagern den Flexspline 32 am Kopplungsabschnitt 52. Am Aufnahmeabschnitt 98 ist ein sich axial erstreckender Durchbruch 87 zur Durchführung elektrischer Leitungen 89 ausgebildet. Die Leitungen 89 verbinden die Elektronik 48 der Antriebseinheit 10 mit einer zur Sensorik 92 gehörenden Elektronik (nicht dargestellt).

Mittels der Hülse 96 ist eine Dichtfläche 104 für eine Dichtstelle zwischen der Tretkurbelwelle 14 und dem Statorträger 40 gebildet, durch welchen die Tretkurbelwelle 14 geführt ist.

Die Hülse 96 und die Tretkurbelwelle 14 sind mittels eines radial zwischen der Tretlagerwelle 14 und der Hülse 96 angeordneten Dichtelements 106, beispielsweise einem O-Ring 106, abgedichtet.

In vorteilhafter Weise kann an oder in der Hülse 96 eine Leitungsführung, beispielsweise ein Kanal, ausgebildet sein (nicht dargestellt), in der die elektrischen Leitungen 89 zur Leistungsübertragung und/oder Signalübertragung zwischen der Sensorik 92 zur Drehmomentmessung zu der Elektronikeinheit 48 anordenbar sind.

Auf die Hülse 96 sind ein oder mehrere Schleifringe 108, 110 (Fig. 6a, b) zur Leistungsübertragung und/oder Signalübertragung zwischen der Elektronikeinheit 48 insbesondere der Elektronikplatine und der Sensorik 92 zur Drehmomentmessung aufgebracht. Die Elektronikeinheit 48, beispielsweise Die Elektronikplatine, weist eine oder mehrere elektrische Schleifkontakte 112, 114 auf, die jeweils mit einem Schleifring 108, 110 zusammenwirken.

### Bezugszeichenliste

- 10: Antriebseinheit
- 12: Gehäuse
- 14: Tretkurbelwelle
- 16: Hilfsantrieb, elektrisch
- 18: Elektromotor
- 20: Wellgetriebe
- 22: Abtriebswelle
- 24: erste Freilaufkupplung
- 26: zweite Freilaufkupplung
- 28: Innenumfangsfläche
- 30: Wellgenerator
- 32: verformbare Innenbuchse, Flexspline
- 34: Außenbuchse
- 36: Stator
- 37: Statorwicklungen
- 38: Rotor
- 40: Statorträger
- 42: Trageabschnitt
- 44: Befestigungsabschnitt
- 46: Wälzlager
- 48: Elektronikeinheit,- platine
- 50: Adapter
- 52: Kopplungsabschnitt
- 54: Verbindungsbereich
- 56: Passung
- 58: Klebung
- 60: Passungsbereich
- 62: Klebebereich
- 64: radialer Absatz
- 66: erster Wellenteil
- 68: zweiter Wellenteil
- 70: abragender Bund
- 72: Verschraubung
- 74: Schraube
- 76: Bohrung
- 78: erstes Lager
- 80: Gehäusedeckel
- 82: zweites Lager
- 84: drittes Lager
- 86: viertes Lager
- 87: Durchbruch
- 88: Wellenabsatz
- 89: elektrische Leitungen
- 90: Stirnseite
- 92: Sensorik
- 94: magnetostriktive Messelemente
- 96: Hülse
- 98: Aufnahmeabschnitt
- 100: Wälzlager
- 102: Wälzlager
- 104: Dichtfläche
- 106: Dichtelement
- 108: Schleifring
- 110: Schleifring
- 112: Schleifkontakt
- 114: Schleifkontakt

## Patentansprüche

1. Antriebseinheit (10) für ein manuell angetriebenes Fahrzeug , insbesondere ein Fahrrad oder ein Electrically Power Assisted Cycle, mit einem Gehäuse (12), einer Tretkurbelwelle (14), einem elektrischen Hilfsantrieb (16) und einer als Hohlwelle ausgebildeten Abtriebswelle (22), wobei die Tretkurbelwelle (14) und die Abtriebswelle (22) koaxial zueinander angeordnet sind und die Abtriebswelle (22) die Tretkurbelwelle (14) axial abschnittsweise nach radial außen umgibt, wobei radial zwischen der Tretkurbelwelle (14) und der Abtriebswelle (22) eine erste Freilaufkupplung (24) und eine zweite Freilaufkupplung (26) angeordnet sind, die axial zueinander benachbart sind und auf die Abtriebswelle (22) wirken, wobei der elektrische Hilfsantrieb (16) ein Wellgetriebe (20) mit einem Flexspline (32) aufweist, wobei der Flexspline (32) über einen vorzugsweise ringförmigen Adapter (50) mit der zweiten Freilaufkupplung (26) gekoppelt ist, wobei der Flexspline (32) einen Kopplungsabschnitt (52) aufweist, über den der Flexspline (32) und der Adapter (50) in einem Verbindungsbereich (54) miteinander verbunden sind, wobei im Verbindungsbereich (54) eine Passung (56) und/oder eine Klebung (58) ausgebildet sind, **dadurch gekennzeichnet, dass** die Tretkurbelwelle (14) mittels einem ersten Lager (78) an einem das Gehäuse (12) begrenzenden Gehäusedeckel (80) drehbar gelagert ist und dass die Tretkurbelwelle (14) mittels einem zweiten Lager (82) an der Abtriebswelle (22) gelagert ist.

2. Antriebseinheit (10) nach Anspruch 1, **dadurch gekennzeichnet, dass** die erste Freilaufkupplung (24) die Tretkurbelwelle (14) mit der Abtriebswelle (22) koppelt und dass die zweite Freilaufkupplung (26) den elektrischen Hilfsantrieb (16) mit der Abtriebswelle (22) koppelt.

3. Antriebseinheit (10) nach einem der voranstehenden Ansprüche, **dadurch gekennzeichnet, dass** die Tretkurbelwelle (14) einen ersten Wellenteil (66) und einen separaten zweiten Wellenteil (68) aufweist, die miteinander verbindbar sind.

4. Antriebseinheit (10) nach Anspruch 3, **dadurch gekennzeichnet, dass** die beiden Wellenteile (66, 68) mittels einer, vorzugsweise zentrisch angeordneten, Verschraubung (72) aneinander befestigbar oder befestigt sind.

5. Antriebseinheit (10) nach einem der voranstehenden Ansprüche, **dadurch gekennzeichnet, dass** die Tretkurbelwelle (14) einen nach radial außen abragenden Wellenabsatz (88) aufweist, über den die Tretlkurbelwelle (14) mit der ersten Freilaufkupplung (24) gekoppelt ist, wobei eine Sensorik (92) zur Drehmomenterfassung vorgesehen ist, die das auf die Tretkurbelwelle (14) aufgebrachte Drehmoment am Wellenabsatz (88) erfasst.

6. Antriebseinheit (10) nach Anspruch 5, **dadurch gekennzeichnet, dass** die Sensorik (92) zur Drehmomenterfassung einen oder mehrere Dehnmesstreifen oder ein oder mehrere magnetostriktive Messelemente (94) aufweist.

7. Antriebseinheit (10) nach einem der voranstehenden Ansprüche, **dadurch gekennzeichnet, dass** eine Hülse (96) vorgesehen ist, die auf die Tretkurbelwelle (14) aufgeschoben oder aufgepresst ist, wobei die Hülse (96) einen Aufnahmeabschnitt (98) für ein oder mehrere Wälzlager (100, 102) des Flexspline (32) aufweist, in dem das oder die Wälzlager (100, 102) axial fixierbar ist oder sind.

8. Antriebseinheit (10) nach Anspruch 7, **dadurch gekennzeichnet, dass** mittels der Hülse (96) eine Dichtfläche (104) für eine Dichtstelle zwischen der Tretkurbelwelle (14) und einem Statorträger (40) gebildet ist, durch welchen die Tretkurbelwelle (14) geführt ist.

9. Antriebseinheit (10) nach Anspruch 7 oder 8, **dadurch gekennzeichnet, dass** an oder in der Hülse (96) eine Leitungsführung ausgebildet ist, in der elektrische Leitungen (89) zur Leistungsübertragung und/oder Signalübertragung zwischen einer Sensorik zur Drehmomentmessung zu einer Elektronikeinheit (48) anordenbar sind und/oder dass auf die Hülse (96) ein oder mehrere Schleifringe (108, 110) zur Leistungsübertragung und/oder Signalübertragung zwischen der Elektronikeinheit (48) und einer Sensorik zur Drehmomentmessung aufgebracht sind.

## Claims

1. Drive unit (10) for a manually driven vehicle, in particular a bicycle or an electrically power assisted cycle, with a housing (12), a bottom bracket shaft (14), an electric auxiliary drive (16), and an output shaft (22) designed as a hollow shaft, wherein the bottom bracket shaft (14) and the output shaft (22) are arranged coaxially with each other and the output shaft (22) surrounds the bottom bracket shaft (14) axially in some areas and radially on the outside, wherein a first freewheel clutch (24) and a second freewheel clutch (26), which are adjacent to each other axially and act on the output shaft (22), are arranged radially between the bottom bracket shaft (14) and the output shaft (22), wherein the electric auxiliary drive (16) has a harmonic drive (20) with a flex spine (32), wherein the flex spine (32) is coupled to the second freewheel clutch (26) via a preferably annular adapter (50), wherein the flex spine (32) has a coupling section (52) via which the flex spine (32) and the adapter (50) are connected to each other in a connecting region (54), wherein a fit (56) and/or an adhesive bond (58) are formed in the connecting region (54), **characterized in that** the bottom bracket shaft (14) is mounted rotatably on a housing cover (80) delimiting the housing (12) by means of a first bearing (78), and **in that** the bottom bracket shaft (14) is mounted on the output shaft (22) by means of a second bearing (82).

2. Drive unit (10) according to Claim 1, **characterized in that** the first freewheel clutch (24) couples the bottom bracket shaft (14) to the output shaft (22), and **in that** the second freewheel clutch (26) couples the electric auxiliary drive (16) to the output shaft (22).

3. Drive unit (10) according to either of the preceding claims, **characterized in that** the bottom bracket shaft (14) has a first shaft part (66) and a separate second shaft part (68) which can be connected to each other.

4. Drive unit (10) according to Claim 3, **characterized in that** the two shaft parts (66, 68) can be or are fastened to each other by means of a preferably centrally arranged screw connection (72).

5. Drive unit (10) according to any of the preceding claims, **characterized in that** the bottom bracket shaft (14) has a radially outward projecting shaft shoulder (88) via which the bottom bracket shaft (14) is coupled to the first freewheel clutch (24), wherein a sensor system (92) for torque detection is provided which detects the torque at the shaft shoulder (88) which is applied to the bottom bracket shaft (14).

6. Drive unit (10) according to Claim 5, **characterized in that** the sensor system (92) for torque detection has one or more strain gauges or one or more magnetostrictive measuring elements (94).

7. Drive unit (10) according to any of the preceding claims, **characterized in that** a sleeve (96) which is pushed or pressed onto the bottom bracket shaft (14), is provided, wherein the sleeve (96) has a socket section (98) for one or more rolling bearings (100, 102) of the flex spine (32), in which the rolling bearing or bearings (100, 102) can be fixed axially.

8. Drive unit (10) according to Claim 7, **characterized in that** a sealing surface (104) for a sealing point between the bottom bracket shaft (14) and a stator carrier (40), through which the bottom bracket shaft (14) is guided, is formed by means of the sleeve (96).

9. Drive unit (10) according to Claim 7 or 8, **characterized in that** a line guide, in which can be arranged electrical lines (89) for power transmission and/or signal transmission between a sensor system for torque measurement and an electronics unit (48), is formed on or in the sleeve (96), and/or **in that** one or more slip rings (108, 110) for power transmission and/or signal transmission between the electronics unit (48) and a sensor system for torque measurement are attached on the sleeve (96).

## Revendications

1. Unité d'entraînement (10) pour un véhicule à propulsion manuelle, notamment une bicyclette ou un vélo à assistance électrique, comprenant un boîtier (12), un arbre de pédalier (14), un entraînement électrique auxiliaire (16) et un arbre de sortie (22) réalisé sous la forme d'un arbre creux, l'arbre de pédalier (14) et l'arbre de sortie (22) étant disposés de manière coaxiale l'un par rapport à l'autre et l'arbre de sortie (22) entourant l'arbre de pédalier (14) axialement par sections vers l'extérieur dans le sens radial, un premier accouplement à roue libre (24) et un deuxième accouplement à roue libre (26) étant disposés radialement entre l'arbre de pédalier (14) et l'arbre de sortie (22), lesquels sont adjacents l'un à l'autre dans le sens axial et agissent sur l'arbre de sortie (22), l'entraînement électrique auxiliaire (16) possédant un réducteur harmonique (20) avec dispositif Flexspline (32), le dispositif Flexspline (32) étant accouplé au deuxième accouplement à roue libre (26) par l'intermédiaire d'un adaptateur (50) de préférence de forme annulaire, le dispositif Flexspline (32) possédant une portion d'accouplement (52) par le biais de laquelle le dispositif Flexspline (32) et l'adaptateur (50) sont reliés l'un à l'autre dans une zone de liaison (54), un ajustement (56) et/ou un collage (58) étant réalisés dans la zone de liaison (54), **caractérisée en ce que** l'arbre de pédalier (14) est monté de manière rotative au moyen d'un premier palier (78) sur un couvercle de boîtier (80) qui délimite le boîtier (12) et **en ce que** l'arbre de pédalier (14) est monté au moyen d'un deuxième palier (82) sur l'arbre de sortie (22).

2. Unité d'entraînement (10) selon la revendication 1, **caractérisée en ce que** le premier accouplement à roue libre (24) accouple l'arbre de pédalier (14) à l'arbre de sortie (22) et **en ce que** le deuxième accouplement à roue libre (26) accouple l'entraînement électrique auxiliaire (16) à l'arbre de sortie (22).

3. Unité d'entraînement (10) selon l'une des revendications précédentes, **caractérisée en ce que** l'arbre de pédalier (14) possède une première partie d'arbre (66) et une deuxième partie d'arbre (68) séparée, qui peuvent être reliées entre elles.

4. Unité d'entraînement (10) selon la revendication 3, **caractérisée en ce que** les deux parties d'arbre (66, 68) peuvent être fixées ou sont fixées l'une à l'autre au moyen d'un raccord vissé (72) de préférence disposé de manière centrée.

5. Unité d'entraînement (10) selon l'une des revendications précédentes, **caractérisée en ce que** l'arbre de pédalier (14) présente un épaulement d'arbre (88) qui fait saillie vers l'extérieur dans le sens radial, par le biais duquel l'arbre de pédalier (14) est accouplé au premier accouplement à roue libre (24), un système de capteurs (92) étant prévu pour détecter le couple appliqué sur l'arbre de pédalier (14) au niveau de l'épaulement d'arbre (88).

6. Unité d'entraînement (10) selon la revendication 5, **caractérisée en ce que** le système de capteurs (92) destiné à détecter le couple possède une ou plusieurs jauges de contrainte ou un ou plusieurs éléments de mesure magnétostrictifs (94).

7. Unité d'entraînement (10) selon l'une des revendications précédentes, **caractérisée en ce qu'**un manchon (96) est prévu, lequel est emmanché ou pressé sur l'arbre de pédalier (14), le manchon (96) possédant une portion de réception (98) pour un ou plusieurs roulements (100, 102) du dispositif Flexspline (32), dans laquelle le ou les paliers à roulement (100, 102) peuvent être ou sont calés axialement.

8. Unité d'entraînement (10) selon la revendication 7, **caractérisée en ce qu'**une surface d'étanchéité (104) est formée au moyen du manchon (96) pour un point d'étanchéité entre l'arbre de pédalier (14) et un porte-stator (40) à travers lequel passe l'arbre de pédalier (14).

9. Unité d'entraînement (10) selon la revendication 7 ou 8, **caractérisée en ce qu'**un guide-câbles est formé sur ou dans le manchon (96), dans lequel peuvent être disposés des câbles électriques (89) servant à la transmission de puissance et/ou à la transmission de signaux entre un système de capteurs destiné à la mesure du couple et une unité électronique (48) et/ou **en ce qu'**une ou plusieurs bagues collectrices (108, 110) sont montées sur le manchon (96) pour la transmission de puissance et/ou la transmission de signaux entre l'unité électronique (48) et un système de capteurs destiné à la mesure du couple.
